# NEW EUROPEAN PATENT SPECIFICATION

(11) **EP 2 038 550 B2**
(45) Date of publication and mention of the opposition decision: **14.09.2022**
(45) Mention of the grant of the patent: 17.10.2018
(21) Application number: 07729473.4
(22) Date of filing: 24.05.2007
(51) Int. Cl.: F03D 13/20

(54) **A TOWER CONSTRUCTION FOR A WIND TURBINE**
TURMKONSTRUKTION FÜR EINE WINDTURBINE
CONSTRUCTION DE TOUR POUR UNE TURBINE ÉOLIENNE

(30) Priority: 29.06.2006 DK 200600868
(43) Date of publication of application: 25.03.2009
(73) Proprietor: Vestas Wind Systems A/S, 8200 Aarhus N (DK)
(72) Inventor: MORTENSEN, Henning, 8900 Randers (DK)
(74) Representative: Grünecker Patent- und Rechtsanwälte PartG mbB
(86) International application number: PCT/EP2007/055042
(87) International publication number: WO 2008/000565

(56) References cited:
- WO-A-00/36724
- WO-A-02/38953
- WO-A1-2006/056196
- WO-A1-2007/034011
- DE-A1- 10 102 023
- DE-A1- 19 741 495
- DE-C1- 10 144 167
- DE-U1- 20 212 459
- DE-U1-202004 020 720
- GB-A- 413 028
- GB-A- 674 651
- JP-A- 60 056 181
- JP-A- 2006 070 879
- NL-C2- 1 020 345
- US-A- 4 774 855
- US-A1- 2003 147 753

## Description

### FIELD OF THE INVENTION

The present invention relates to a tower construction for a wind turbine. More particularly, the present invention relates to a tower construction which is improved in terms of fatigue and strength as compared to prior art tower constructions.

### BACKGROUND OF THE INVENTION

In wind turbines it is necessary to provide various devices and connections along a longitudinal direction defined by the tower construction. For instance, it is normally necessary to provide electrical connections between the nacelle and the part of the tower construction positioned at ground level in order to be able to communicate electrical signals to and from the nacelle. Such electrical signals may include control signals for controlling the wind turbine (communicated to the nacelle) and electrical power generated by a generator positioned in the nacelle (communicated from the nacelle). In order to communicate such signals, appropriate cables are normally positioned in a hollow part of the tower construction. Furthermore, the cables are normally fixed to a side wall of the tower construction, e.g. by means of holders which have been fixedly attached to the side wall, e.g. welded to the side wall.

In addition to cables, it may be necessary to attach other devices to the side walls of the tower construction, e.g. light armatures, ladders, resting platforms, supply lines for fluids, such as gas, air, water, oil, e.g. for hydraulic systems, etc. Such devices may be fitted directly onto a side wall of the tower construction, or they may be fitted in appropriate holders which have been fitted to the side wall.

When holders or devices are welded to a side wall of the tower construction, weak points of the tower construction will appear at the welding sites. Accordingly, the overall strength of the tower construction is decreased, e.g. in terms of fatigue. This is very undesirable.

It has been attempted to solve the problems outlined above by using holders which may be attached to a side wall of the tower construction by means of magnets. However, it is not possible to use this solution when the tower construction is made from a material which is not magnetisable, e.g. concrete.

US2003/0147753 discloses a method of attaching elements in a wind turbine by magnetism, WO00/36724 discloses a wind turbine with cables extending between a nacelle and a stationary part, and a suspension with supporting surfaces in abutting contact with the cables. GB413,028 discloses a wind driven generator with output leads from the generator being passed through a special connection with a plug of non-conductive material inserted in a hollow bearing.

### SUMMARY OF THE INVENTION

It is, thus, an object of the invention to provide a tower construction for a wind turbine, the tower construction being stronger than prior art tower constructions.

It is a further object of the invention to provide a tower construction for a wind turbine, the tower construction being easier to build than prior art tower constructions.

It is an even further object of the invention to provide a method of mounting a cable in a tower construction for a wind turbine in a manner which is safer than corresponding prior art methods.

According to a first aspect of the invention the tower construction has the features as set out in claim 1.

The transmission system is used for transmitting torque provided by rotating blades to the power generating means. The transmission system preferably is or comprises a gear system. The power generating means preferably is or comprises a generator which is connected in a suitable manner to a power grid.

The first structure is adapted to support the wind turbine structure. Thus, the first structure performs the primary function of the tower construction, i.e. it supports and carries the entire wind turbine. The first structure defines a longitudinal direction. A tower construction for a wind turbine normally has an elongated shape, thereby defining a longitudinal direction. When the wind turbine is positioned at its operating site the longitudinal direction will normally be an at least substantially vertical direction extending between ground level and the position of the nacelle. However, when the tower construction is being transported, the longitudinal direction will normally be at least substantially horizontal.

The first structure has at least one wall part. The wall part(s) may be inner and/or outer wall parts. In the case that the first structure is at least substantially massive it will have only outer wall part(s). However, in the case that the first structure is hollow, it may comprise inner wall parts as well as outer wall parts, the inner wall parts being arranged in the interior of the hollow construction.

The second structure is adapted to carry its own weight. Preferably, this is the only structural load which the second structure is subjected to. Thus, the second structure does not share the structural load of the wind turbine with the first structure, i.e. the first structure alone is capable of carrying the wind turbine structure, and removing the second structure from the tower construction would therefore have no structural effect.

The second structure is arranged along the longitudinal direction defined by the first structure, and it extends along at least a substantial length of the first structure in this direction. Thus, the length of the first structure and the length of the second structure along the longitudinal direction are at least substantially identical, or at least of the same order of magnitude. However, the lengths are not necessarily exactly identical. For instance, the second structure may have a length which is 5% or 10% shorter than the length of the first structure. In this case the second structure may be arranged relatively to the first structure in such a manner that, when the wind turbine has been installed at the operation site, it extends from ground level to a position which is lower than the uppermost part of the first structure. Thereby the second structure may advantageously perform tasks which are normally performed by the tower construction of a wind turbine, but which are not directly related to carrying structural loads. Such tasks may include fixing cables and wires, carrying lightning armatures, carrying ladders or lifts, etc. This is very advantageous because it is thereby avoided that such items need to be fixed directly onto the first structure, i.e. the load carrying structure, and thereby the risk that this structure is weakened is considerably reduced or even eliminated.

The first structure and the second structure are positioned relatively to each other in such a manner that no fixed connections between the second structure and the wall part(s) of the first structure are formed. In the present context the term 'fixed connection' should be interpreted to mean a connection which attaches the second structure directly to a wall part of the first structure, preferably in an at least substantially irreversible manner. Examples of fixed connections are weldings, rivets and screw connections. As mentioned above, such fixed connections tend to weaken the tower construction in terms of fatigue, and it is therefore an advantage that such connections are avoided. Temporary connections, such as abutments, should not be regarded as fixed connections.

Accordingly, the present invention provides a tower construction which is stronger, e.g. in terms of fatigue, than prior art tower constructions. Simultaneously, the tower construction of the invention allows various items, such as cables, wiring, lightning armatures, ladders, etc. to be attached to the tower construction without compromising the overall strength of the tower construction.

The second structure may be provided with one or more supporting arms being adapted to abut at least one of the wall part(s) of the first structure, thereby reducing deflections of the second structure in a direction substantially transverse to the longitudinal direction defined by the first structure. Thus, the supporting arm(s) stabilises the second structure in terms of deflections. However, an abutment does not give rise to structurally weak points since it is not a fixed connection as defined above.

Furthermore, one or more supporting arms may further be adapted to dampen relative oscillations between the first structure and the second structure. According to this embodiment the second structure functions as a dampening means for possible oscillations in the tower construction. Thus, dampening is provided without the need for additional parts.

The second structure may be arranged in an interior part of the first structure. In this case the first structure is a hollow structure, i.e. it forms an interior in which the second structure can be arranged. Since the first structure surrounds the second structure, the second structure may be protected from wind and weather by the first structure if the first structure is at least substantially closed. Accordingly, there is no need to provide additional protection for the second structure or for any parts or items attached to the second structure. Furthermore, the access to the second structure and any parts or items attached thereto can easily be controlled by means of a lockable door arranged in the first structure.

Alternatively, the first structure may be arranged in an interior part of the second structure, or the second structure may be arranged along an exterior part of the first structure.

The first structure may form an at least substantially closed part. In this case the first structure preferably forms a hollow interior part which is at least substantially enclosed by the first structure. The first structure may comprise solid walls, e.g. concrete walls or stainless steel walls. Alternatively, the first structure may comprise walls which are not solid, but which still enclose a hollow interior part. This may, e.g., be obtained if at least part of the first structure forms a grid-like pattern.

The second structure forms a grid-like part. The second structure is preferably a grid tower arranged in an interior part of the first structure, the first structure forming an at least substantially closed part as described above. Thus, according to a preferred embodiment the first structure is at least substantially closed, and a grid-like second structure is arranged in an interior part of the first structure.

The second structure is adapted to carry one or more components of the wind turbine. At least one of the component(s) may be of a kind which needs to extend along at least a substantial part of the second structure along the longitudinal direction. Examples of such components are power cables or busbars for leading generated power from the wind turbine to a power grid, supply lines for supplying power, fluids, control signals, etc. to/from the nacelle, stairs, ladders, lift rails, safety measures with respect to items to be moved in the tower construction, etc.

Alternatively or additionally, components which do not extend along at least a substantial part of the second structure may be carried by the second structure. Examples of such components are resting platforms, electrical installations, such as lightning armatures or electrical sockets, abutment arms as described above, dampening arrangements for dampening vibrations and/or oscillations, anchorages for snap-hooks, etc.

At least one of the component(s) may be pre-mounted on the second structure. In this case time is saved when the tower construction is being installed on the operation site, since the pre-mounted component(s) will not have to be fitted on site. Thereby logistics are improved, and manufacturing is made easier and more efficient.

The second structure is adapted to at least substantially enclose one or more parts which need to be moved along the longitudinal direction defined by the first structure. In this case the second structure defines an at least substantially closed space in which the moving parts can be arranged. Thus, the second structure provides protection for persons working at or near the tower construction in the sense that it prevents such persons from being located at a position where there is a risk that the moving parts may accidentally fall. This is very advantageous. Examples of parts which need to be moved along the longitudinal direction are power cables, busbars, supply lines, various wires, etc. Such parts are usually elevated or lowered using a crane, and there is a risk that something breaks during this operation, thereby causing the heavy parts to fall.

The embodiment described above is particularly advantageous when the second structure is arranged in an interior part of the first structure.

The tower construction is formed by a number of individual tower sections, each tower section comprising a first structure section and a second structure section, and each of the first structure sections forms part of the first structure, and each of the second structure sections forms part of the second structure. Modern tower constructions are so tall that it is often very difficult, or even impossible, to transport a complete tower construction. Therefore it is sometimes advantageous to construct the tower construction by means of a number of individual tower sections, each tower section defining a specific part of the tower construction along the longitudinal direction defined by the first structure. According to this embodiment of the invention, each of the tower sections comprises a first structure section and a second structure section. Accordingly, when the tower sections are assembled at the operation site, the first structure sections in combination will form the first structure, and the second structure sections in combination will form the second structure. Thereby the resulting tower construction comprises a first structure and a second structure as defined above. Thus, the tower construction is easily assembled and installed at the operation site. Furthermore, it is an advantage that as much of the tower construction as possible can be assembled before the tower construction is transported to the operation site, since the logistics are thereby improved.

Each of the first structure sections may be provided with at least one flange for providing a connection interface to an adjacent first structure section, and each of the second structure sections may be fixed to a flange of a corresponding first structure section. Since each of the second structure sections is fixed to a flange of a corresponding first structure section, the sections do not move relatively to each other during transport of the tower section, and it is thereby possible to assemble the tower construction in a more precise manner. Furthermore, since the flange does not form part of the walls parts of the first structure, the strength of the first structure is not compromised, even though a fixed connection is formed between the first structure and the second structure. Furthermore, the fixed connection appears at a position where it under any circumstance is necessary to join two tower sections, and thereby it does not contribute further to weakening of the tower construction.

The tower construction may further comprise a cable unit arranged at a lower part of the tower construction, and one or more cables extending from the cable unit towards the nacelle along the second structure. According to this embodiment, all cables, supply lines, wires, etc. which are needed in order to operate the wind turbine are preferably delivered in the cable unit. The cable unit is positioned on top of a foundation, and the tower construction is positioned or assembled on top of the foundation, and in such a manner that the cable unit is enclosed by the tower construction. When the wind turbine has been installed, the cable unit is opened, and the cables, supply lines and wires positioned therein are elevated from the cable unit towards the nacelle, e.g. using a crane. The cable unit preferably comprises or is connected to a control unit for supplying control signals to the wind turbine.

It is an advantage to provide the cables, supply lines, wires, etc. needed for operating the wind turbine in a cable unit as described above. Thereby it can be ensured from the onset that everything needed is present when the wind turbine is installed at the operation site, and logistics are improved.

According to a second aspect of the invention a method of mounting at least one cable in a wind turbine comprises the features of claim 10.

This method has already been described above.

According to this embodiment, the second structure may advantageously operate as a safety measure as described above.

It should be noted that a skilled person would readily recognise that any feature described in combination with the first aspect of the invention may equally be combined with the second aspects of the invention, any feature described in combination with the second aspect of the invention may equally be combined with the first aspects of the invention.

### BRIEF DESCRIPTION OF THE DRAWINGS

The invention will now be described in further detail with reference to the accompanying drawings in which
Fig. 1 is a perspective view of a tower construction according to an embodiment of the invention, and
Figs. 2-7 show various parts of the tower construction of Fig. 1, and from various angles.

### DETAILED DESCRIPTION OF THE DRAWINGS

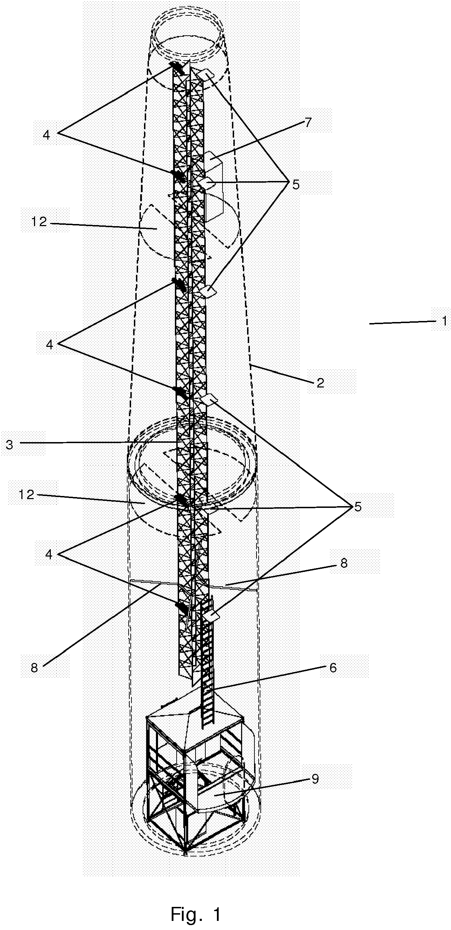

Fig. 1 is a perspective view of a tower construction 1 according to an embodiment of the invention. The tower construction 1 comprises a first structure 2 and a second structure 3. The first structure 2 forms a closed part defining a hollow interior part in which the second structure 3 is arranged. For the sake of clarity the contours of the first structure 2 are shown by means of a dashed line, thereby allowing the second structure 3 to be seen.

The second structure 3 is a grid-like structure adapted to carry various components or items which are needed in the tower construction 1. This will be described in further detail below.

The first structure 2 is adapted to support and carry the load from the wind turbine structure, including it own weight and the weight from a nacelle and any components or parts positioned in the nacelle. Thus, the first structure 2 constitutes the structural, load carrying part of the tower construction 1.

As mentioned above, the second structure 3 has a number of various components attached thereto, including a number of lightning armatures 4 for providing light inside the tower construction 1, and a number of resting platforms 5 where a person climbing up or down the tower construction 1 may rest.

The second structure 3 is furthermore provided with a ladder 6 which a person may climb in case it is necessary to reach components positioned along the second structure 3 and/or parts positioned in the nacelle. In Fig. 1 only the lowermost part of the ladder 6 is shown. It should, however, be noted that the ladder 6 preferably extends along the entire length of the second structure 3, thereby allowing access to any component attached to the second structure 3 and to the nacelle.

The second structure 3 is furthermore provided with a lift 7, i.e. the rails in which the lift 7 moves are attached to the second structure 3. The purpose of the lift 7 is also to allow persons to enter the nacelle.

Finally, the second structure 3 is provided with two service and lift platforms 12. From the service and lift platforms 12 it is possible to enter/leave the lift 7, and it is possible to provide maintenance to the tower construction 1 and/or to various components attached to the second structure 3.

Two supporting arms 8 are also attached to the second structure 3. The supporting arms 8 are arranged in such a manner that they abut a wall part of the first structure 2. Thereby the supporting arms 8 prevent sideways deflections of the second structure 3, and thereby a stabile construction is achieved. Furthermore, the supporting arms 8 serve to dampen relative oscillations and vibrations between the first structure 2 and the second structure 3.

At a lower part of the tower construction 1 a control module 9 is positioned. The control module 9 contains various electronic equipment necessary for controlling the wind turbine.

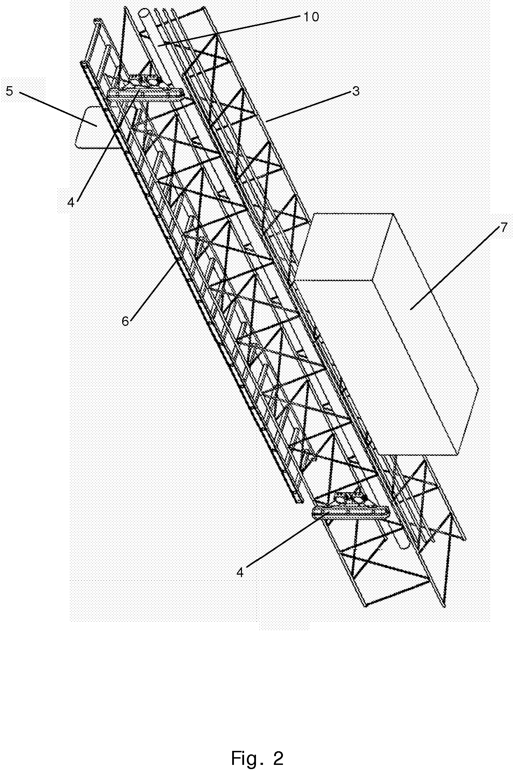

Fig. 2 is a perspective view of a part of the tower construction 1 of Fig. 1. Fig. 2 shows a part of the second structure 3 where a lift 7 is positioned. Fig. 2 further shows lightning armatures 4, resting platforms 5 and a ladder 6 attached to the second structure 3 as described above. Furthermore, a power cable 10 is attached to the second structure 3. The power cable 10 is attached in an interior part of the second structure 3. Thereby the second structure 3 functions as a safety measure in the sense that in case the power cable 10 should fall, e.g. during installation of the power cable 10, it does not fall at positions outside the perimeter defined by the second structure 3. Accordingly, persons located outside this perimeter are not at risk of being hit by a falling power cable 10. This will be described in further details below.

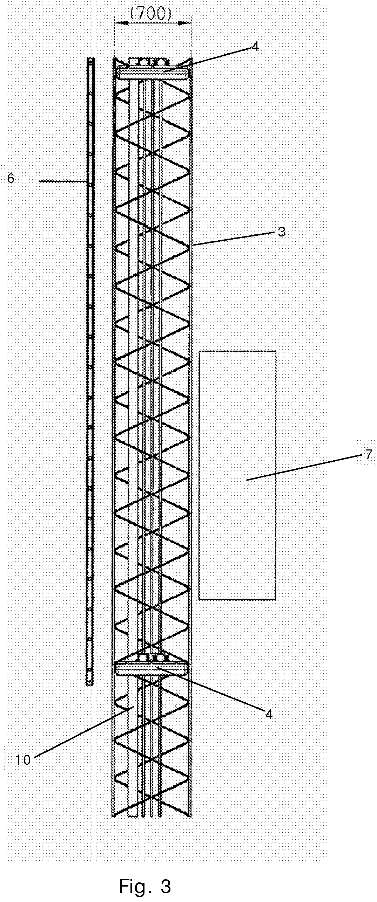

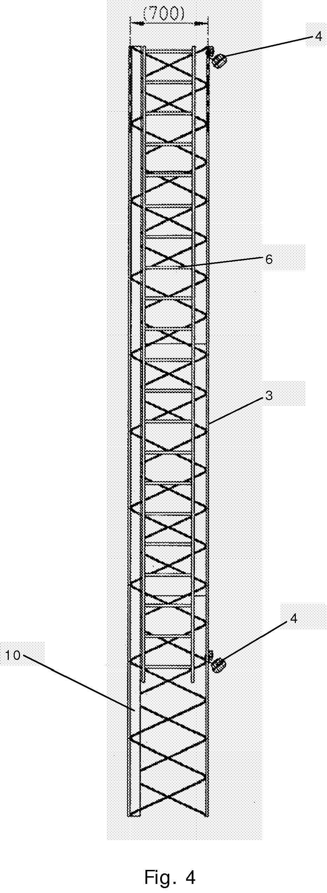

Figs. 3 and 4 are side views from two different angles of the part of the second structure 3 shown in Fig. 2.

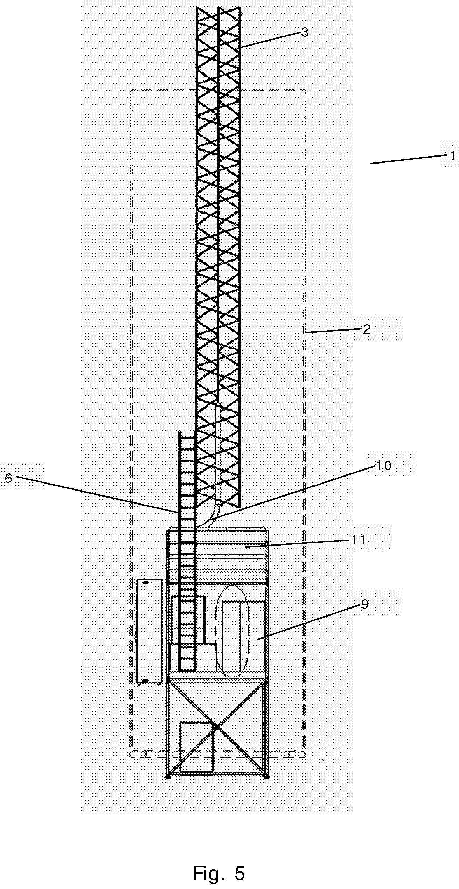

Fig. 5 is a cross sectional view of part of the tower construction 1 of Fig. 1. The first structure 2 is indicated by means of a dashed line. Fig. 5 shows a lower part of the tower construction 1. Accordingly, the ladder 6 and the control module 9 are visible.

On top of the control module 9 a cable unit 11 is positioned. The cable unit 11 contains various cables, supply lines, wires, etc. necessary for supplying power, various fluids, etc. to and from the nacelle. The cable unit 11 is delivered with all the necessary cables etc. packed therein and ready to install.

In Fig. 5 a power cable 10 is in the process of being elevated inside a perimeter defined by the second structure 3. It can be seen that this is easily done from the cable unit 11. Furthermore, it is clear that persons can safely stay outside the perimeter defined by the second structure 3.

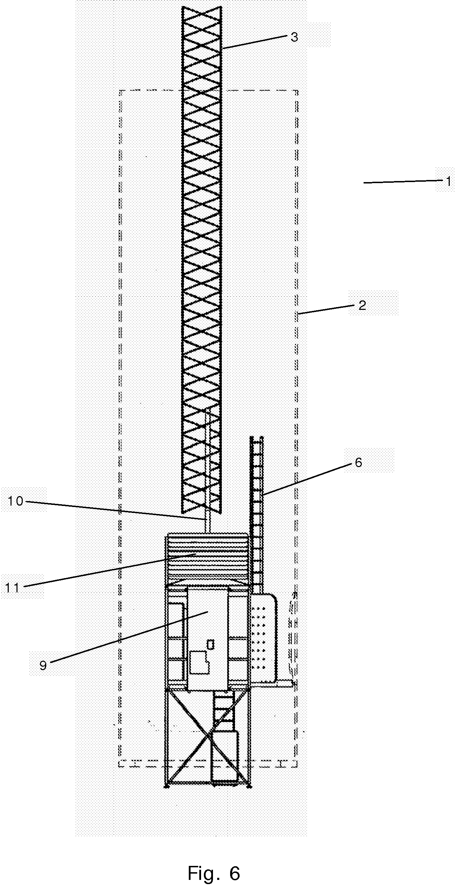

Fig. 6 shows the part of the tower construction 1 shown in Fig. 5 from a different angle.

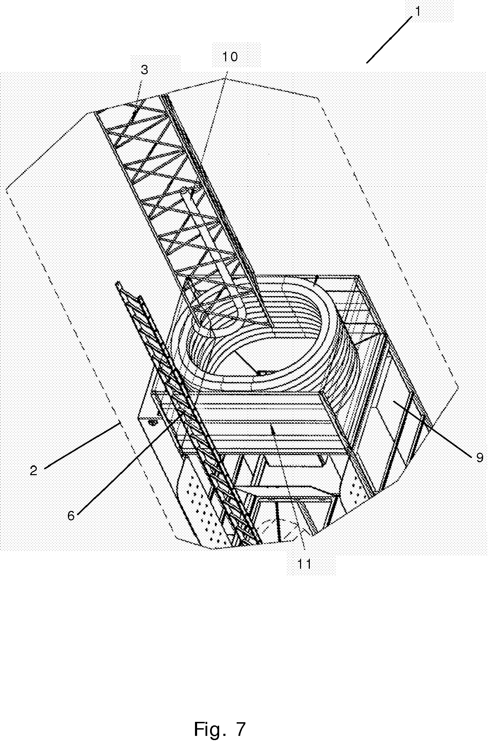

Fig. 7 is a perspective view of a lower part of the tower construction 1 of Fig. 1. Thus, the control module 9 and the cable unit 11 are visible. A power cable 10 is in the process of being elevated from the cable unit 11. Fig. 7 shows how the power cable 10 is arranged in the cable unit 11 in order to allow it to be easily installed in the tower construction 1.

## Claims

1. A tower construction (1) for a wind turbine (WTG), the wind turbine further comprising a set of blades and a nacelle enclosing at least a transmission system and power generating means, the tower construction comprising:
- a first structure (2) being adapted to support the wind turbine structure, including at least the first structure, the blades, the nacelle and the parts enclosed by the nacelle, said first structure defining a longitudinal direction,
and said first structure having at least one wall part extending along the longitudinal direction, and
- a second structure (3) being adapted to carry its own weight and one or more components of the wind turbine, said second structure being arranged along the longitudinal direction defined by the first structure, and said second structure extending along at least a substantial part of the length of the first structure in the longitudinal direction,
wherein the first structure and the second structure are positioned relatively to each other in such a manner that no fixed connections between the second structure and the wall part(s) of the first structure are formed, and
wherein the second structure (3) is adapted to at least substantially enclose one or more parts which need to be moved along the longitudinal direction defined by the first structure (2)
wherein the tower construction is formed by a number of individual tower sections, each tower section comprising a first structure section and a second structure section, and wherein each of the first structure sections forms part of the first structure, and each of the second structure sections forms part of the second structure, and
wherein the second structure (3) forms a grid-like part.

2. A tower construction according to claim 1, wherein the second structure is provided with one or more supporting arms (8) being adapted to abut at least one of the wall part(s) of the first structure, thereby reducing deflections of the second structure in a direction substantially transverse to the longitudinal direction defined by the first structure.

3. A tower construction according to claim 2, wherein the one or more supporting arms (8) is/are further adapted to dampen relative oscillations between the first structure and the second structure.

4. A tower construction according to any of the preceding claims, wherein the second structure (3) is arranged in an interior part of the first structure.

5. A tower construction according to any of the preceding claims, wherein the first structure (2) forms an at least substantially closed part.

6. A tower construction according to any of the preceding claims, wherein at least one of the component(s) is of a kind which needs to extend along at least a substantial part of the second structure (3) along the longitudinal direction.

7. A tower construction according to any of the preceding claims, wherein at least one of the component(s) is pre-mounted on the second structure.

8. A tower construction according to any of claims 1 to 7, wherein each of the first structure sections is provided with at least one flange for providing a connection interface to an adjacent first structure section, and wherein each of the second structure sections is fixed to a flange of a corresponding first structure section.

9. A tower construction according to any of the preceding claims, further comprising a cable unit (11) arranged at a lower part of the tower construction, and one or more cables extending from the cable unit towards the nacelle along the second structure.

10. A method of mounting at least one cable in a wind turbine, the wind turbine comprising a tower construction according to any of claims 1 to 9, a set of blades and a nacelle enclosing at least a transmission system and power generating means the method comprising the steps of:
- providing a cable unit containing at least one cable to be mounted in the wind turbine,
- positioning the cable unit at a lower part of the tower construction,
- lifting the cable(s) from the cable unit towards an upper part of the wind turbine, along and enclosed by the second structure, said upper part comprising the nacelle.

## Patentansprüche

1. Turmkonstruktion (1) für eine Windturbine (WTG), wobei die Windturbine weiter einen Satz von Blättern und eine Gondel, die mindestens ein Getriebesystem und Stromerzeugungsmittel umschließt, umfasst, wobei die Turmkonstruktion umfasst:
- eine erste Struktur (2), die angepasst ist, um die Windturbinenstruktur, die mindestens die erste Struktur, die Blätter, die Gondel und die von der Gondel umschlossenen Teile beinhaltet, zu stützen, wobei die erste Struktur eine Längsrichtung definiert,
und die erste Struktur mindestens ein Wandteil aufweist, das sich entlang der Längsrichtung erstreckt, und
- eine zweite Struktur (3), die angepasst ist, um ihr eigenes Gewicht und eine oder mehrere Komponenten der Windturbine zu tragen, wobei die zweite Struktur entlang der von der ersten Struktur definierten Längsrichtung angeordnet ist, und die zweite Struktur sich entlang mindestens eines Wesentlichen Teils der Länge der ersten Struktur in der Längsrichtung erstreckt,
wobei die erste Struktur und die zweite Struktur relativ zu einander auf eine solche Weise positioniert sind, dass keine fixierten Verbindungen zwischen der zweiten Struktur und dem/n Wandteil(en) der ersten Struktur gebildet sind, und
wobei die zweite Struktur (3) angepasst ist, um mindestens im Wesentlichen ein oder mehrere Teile zu umschließen, die entlang der von der ersten Struktur (2) definierten Längsrichtung bewegt werden müssen,
wobei die Turmkonstruktion durch eine Anzahl einzelner Turmabschnitte gebildet ist, wobei jeder Turmabschnitt einen ersten Strukturabschnitt und einen zweiten Strukturabschnitt umfasst, und wobei jeder der ersten Strukturabschnitte einen Teil der ersten Struktur bildet, und jeder der zweiten Strukturabschnitte einen Teil der zweiten Struktur bildet,
wobei die zweite Struktur (3) ein gitterartiges Teil bildet.

2. Turmkonstruktion nach Anspruch 1, wobei die zweite Struktur mit einem oder mehreren stützenden Armen (8) versehen ist, die angepasst sind, um an mindestens eines der Wandteil(e) der ersten Struktur anzugrenzen, wobei dadurch Auslenkungen der zweiten Struktur in eine Richtung, die im Wesentlichen quer zu der von der ersten Struktur definierten Längsrichtung ist, reduziert werden.

3. Turmkonstruktion nach Anspruch 2, wobei der eine oder die mehreren stützenden Arme (8) weiter angepasst ist/sind, um relative Oszillationen zwischen der ersten Struktur und der zweiten Struktur abzudämpfen.

4. Turmkonstruktion nach einem der vorstehenden Ansprüche, wobei die zweite Struktur (3) in einem Innenteil der ersten Struktur angeordnet ist.

5. Turmkonstruktion nach einem der vorstehenden Ansprüche, wobei die erste Struktur (2) ein mindestens im Wesentlichen geschlossenes Teil bildet.

6. Turmkonstruktion nach einem der vorstehenden Ansprüche, wobei mindestens eine der Komponent(en) von einer Art ist, die sich entlang mindestens eines wesentlichen Teils der zweiten Struktur (3) entlang der Längsrichtung erstrecken muss.

7. Turmkonstruktion nach einem der vorstehenden Ansprüche, wobei mindestens eine der Komponent(en) auf der zweiten Struktur vormontiert ist.

8. Turmkonstruktion nach einem der Ansprüche 1 bis 7, wobei jeder der ersten Strukturabschnitte mit mindestens einem Flansch versehen ist, um eine Verbindungsschnittstelle zu einem benachbarten ersten Strukturabschnitt bereitzustellen, und wobei jeder der zweiten Strukturabschnitte an einem Flansch eines entsprechenden ersten Strukturabschnitts fixiert ist.

9. Turmkonstruktion nach einem der vorstehenden Ansprüche, weiter umfassend eine Kabeleinheit (11), die an einem unteren Teil der Turmkonstruktion angeordnet ist, und ein oder mehrere Kabel, die sich von der Kabeleinheit entlang der zweiten Struktur hin zu der Gondel erstrecken.

10. Verfahren zum Montieren mindestens eines Kabels in einer Windturbine, wobei die Windturbine eine Turmkonstruktion nach einem der der Ansprüche 1 bis 9, einen Satz von Blättern und eine Gondel, die mindestens ein Getriebesystem und Stromerzeugungsmittel umschließt, umfasst, wobei das Verfahren die folgenden Schritte umfasst:
- Bereitstellen einer Kabeleinheit, die mindestens ein in der Windturbine zu montierendes Kabel enthält,
- Positionieren der Kabeleinheit an einem unteren Teil der Turmkonstruktion,
- Anheben des/r Kabel(s) von der Kabeleinheit entlang und umschlossen von der zweiten Struktur hin zu einem oberen Teil der Windturbine, wobei der obere Teil die Gondel umfasst.

## Revendications

1. Construction de tour(1) pour une éolienne (WTG), l'éolienne comprenant en outre un ensemble de pales et une nacelle enfermant au moins un système de transmission et un moyen de production d'énergie, la construction de tour comprenant:
- une première structure (2) qui est adaptée pour supporter la structure d'éolienne, incluant au moins la première structure, les pales, la nacelle et les parties enfermées par la nacelle, ladite première structure définissant une direction longitudinale,
et ladite première structure présentant au moins une partie de paroi s'étendant le long de la direction longitudinale, et
- une seconde structure (3) qui est adaptée pour porter son propre poids et un ou plusieurs composants de l'éolienne, ladite seconde structure étant agencée le long de la direction longitudinale définie par la première structure, et ladite seconde structure s'étendant le long d'au moins une partie essentielle de la longueur de la première structure dans la direction longitudinale,
dans laquelle la première structure et la seconde structure sont positionnées relativement l'une à l'autre de telle manière que des connexions non fixées entre la seconde structure et la/les partie(s) de paroi de la première structure soient formées, et
dans laquelle la seconde structure (3) est adaptée pour enfermer au moins sensiblement une ou plusieurs parties qui nécessitent d'être déplacées le long de la direction longitudinale définie par la première structure (2)
dans laquelle la construction de tour est formée par un nombre de sections de tour individuelles, chaque section de tour comprenant une première section de structure et une seconde section de structure, et dans laquelle chacune des premières sections de structure forme une partie de la première structure, et chacune des secondes sections de structure forme une partie de la seconde structure, et
dans laquelle la seconde structure (3) forme une partie en forme de grille.

2. Construction de tour selon la revendication 1, dans laquelle la seconde structure est dotée d'un ou de plusieurs bras de support (8) qui sont adaptés pour buter contre au moins une de la/des partie(s) de paroi de la première structure, réduisant ainsi les déviations de la seconde structure dans une direction sensiblement transversale à la direction longitudinale définie par la première structure.

3. Construction de tour selon la revendication 2, dans laquelle les uns ou plusieurs bras de support (8) est/sont en outre adapté(s) pour amortir des oscillations relatives entre la première structure et la seconde structure.

4. Construction de tour selon l'une quelconque des revendications précédentes, dans laquelle la seconde structure (3) est agencée dans une partie intérieure de la première structure.

5. Construction de tour selon l'une quelconque des revendications précédentes, dans laquelle la première structure (2) forme une partie au moins sensiblement fermée.

6. Construction de tour selon l'une quelconque des revendications précédentes, dans laquelle au moins un du/des composant(s) est d'un type qui nécessite de s'étendre le long d'au moins une partie sensible de la seconde structure (3) le long de la direction longitudinale.

7. Construction de tour selon l'une quelconque des revendications précédentes, dans laquelle au moins un du/des composant(s) est prémonté sur la seconde structure.

8. Construction de tour selon l'une quelconque des revendications 1 à 7, dans laquelle chacune des premières sections de structure est dotée d'au moins une bride pour la fourniture d'une interface de connexion à une première section de structure adjacente, et dans laquelle chacune des secondes sections est fixée à une bride d'une première section de structure correspondante.

9. Construction de tour selon l'une quelconque des revendications précédentes, comprenant en outre une unité de câble (11) agencée sur une partie inférieure de la construction de tour, et un ou plusieurs câbles s'étendant depuis l'unité de câble vers la nacelle le long de la seconde structure.

10. Procédé de montage d'au moins un câble dans une éolienne, l'éolienne comprenant une construction de tour selon l'une quelconque des revendications 1 à 9, un ensemble de pales et une nacelle enfermant au moins un moyen de production d'énergie et système de transmission, le procédé comprenant les étapes de:
- la fourniture d'une unité de câble contenant au moins un câble à monter dans l'éolienne,
- le positionnement de l'unité de câble sur une partie inférieure de la construction de tour,
- le levage du/des câble(s) de l'unité de câble vers une partie supérieure de l'éolienne, le long de la seconde structure et enfermé par celle-ci, ladite partie supérieure comprenant la nacelle.
